# EUROPÄISCHE PATENTANMELDUNG

(11) **EP 3 954 256 A1**
(43) Veröffentlichungstag der Anmeldung: **16.02.2022**
(21) Anmeldenummer: 21156487.7
(22) Anmeldetag: 11.02.2021
(51) Int. Cl.: A47J 31/06, A47J 31/44

(54) **SIEBTRÄGER, ANSCHLUSSABSCHNITT FÜR EINEN SIEBTRÄGER SOWIE KAFFEEMASCHINE**

(30) Priorität: 13.08.2020 DE 102020121288
(71) Anmelder: AVS, Ingenieur J.C. Römer GmbH, 94481 Grafenau (DE)
(72) Erfinder: Dirndorfer, Florian, 94481 Grafenau (DE); Absmeier, Michael, 94481 Grafenau (DE)
(74) Vertreter: Wolf, Gerhard

(57) **Zusammenfassung**

Die Erfindung betrifft einen Siebträger für eine Kaffeemaschine umfassend ein Siebträgergehäuse (2) und einen Griff zur Handhabung des Siebträgers, dadurch gekennzeichnet, dass an dem Siebträgergehäuse (2) zumindest zwei radial nach innen offene, eine Führungskontur ausbildende Fixierabschnitte (3, 3') vorgesehen sind, die dazu ausgebildet sind, eine am Anschlussabschnitt (10) der Kaffeemaschine radial nach außen abstehende Fixierkontur (11) zumindest abschnittsweise außenseitig zu umgreifen.

## Beschreibung

Die Erfindung betrifft einen Siebträger für eine Kaffeemaschine, insbesondere eine Espressomaschine, einen Anschlussabschnitt für einen Siebträger sowie eine Kaffeemaschine umfassend einen Siebträger und eine Anschlussabschnitt für einen Siebträger.

Siebträger für Espressomaschinen sind hinlänglich bekannt.

Bekannte Siebträger weisen ein Siebträgergehäuse mit mehreren radial nach außen abstehenden Vorsprüngen auf, die mit einer maschinenseitig am Anschlussabschnitt vorgesehenen Führungskontur zusammenwirken und dabei einen Bajonettverschluss zwischen Siebträger und Anschlussabschnitt ausbilden.

Nachteilig bei der bekannten Verschlussmechanik zwischen Siebträger und Anschlussabschnitt ist, dass der Anschlussabschnitt in dem Bereich der Führungskontur aufgrund der vorhandenen Hinterschneidungen schwer reinigbar ist, diese Führungskontur aber aufgrund der Ausrichtung zum Siebträger bzw. dem Bereich, in dem das Espressopulver gebrüht wird, sehr starken Verschmutzungen ausgesetzt ist.

Ausgehend hiervon ist es Aufgabe der Erfindung, einen Siebträger anzugeben, der bei einfacher Bedienung des Siebträgers eine gute mechanische Kopplung mit dem Anschlussabschnitt und darüber hinaus eine leichte Reinigbarkeit des Siebträgers und des Anschlussabschnitts ermöglicht.

Die Aufgabe wird durch einen Siebträger mit den Merkmalen des unabhängigen Patentanspruchs 1 gelöst. Ein Anschlussabschnitt ist Gegenstand des nebengeordneten Patentanspruchs 9 und eine Kaffeemaschine ist Gegenstand des weiteren, nebengeordneten Patentanspruchs 16. Bevorzugte Ausführungsformen sind Gegenstand der Unteransprüche.

Gemäß einem ersten Aspekt bezieht sich die Erfindung auf einen Siebträger für eine Kaffeemaschine. Der Siebträger umfasst ein Siebträgergehäuse und einen Griff zur Handhabung des Siebträgers. An dem Siebträgergehäuse sind zumindest zwei radial nach innen offene, eine Führungskontur ausbildende Fixierabschnitte vorgesehen. Die Fixierabschnitte sind dazu ausgebildet, eine am Anschlussabschnitt der Kaffeemaschine radial nach außen abstehende Fixierkontur zumindest abschnittsweise außenseitig zu umgreifen. In anderen Worten weist der Siebträger Fixierabschnitte auf, die eine Führungskontur eines Bajonettverschlusses ausbilden. An dem Anschlussabschnitt der Kaffeemaschine sind die mit dieser Führungskontur zusammenwirkenden Fixierkonturen vorgesehen. Führungskonturen und Fixierkonturen bilden in ihrem Zusammenwirken den Bajonettverschluss aus, mittels dem der Siebträger an dem Anschlussabschnitt fixiert und dabei in vertikaler Richtung fluiddicht angepresst wird.

Der technische Vorteil des Siebträgers besteht darin, dass durch das Vorsehen der Führungskontur im Bereich des Siebträgers eine leichte Reinigbarkeit des Anschlussabschnitts erreicht wird, da Hinterschneidungen in leicht verschmutzenden Bereichen des Anschlussabschnitts wirksam vermieden werden.

Gemäß einem Ausführungsbeispiel sind die Fixierabschnitte hakenartig nach außen abstehend und nach oben hin über einen kreisförmigen Anlageabschnitt des Siebträgergehäuses abstehend vorgesehen. Dadurch reichen die Fixierabschnitte bis in eine Ebene oberhalb einer Siebträgerdichtebene, in der - bei Fixierung des Siebträgers am Anschlussabschnitt - der Siebträger gegenüber dem Anschlussabschnitt abgedichtet ist. Die Fixierabschnitte können dabei den Anschlussabschnitt zumindest partiell außenseitig umgreifen.

Gemäß einem Ausführungsbeispiel sind genau zwei Fixierabschnitte vorgesehen, die einander diametral gegenüberliegen. Dadurch wird ein kompaktbauender und leichter Siebträger erreicht, der mit hinreichender Güte an dem Anschlussabschnitt der Kaffeemaschine fixierbar ist.

Gemäß einem Ausführungsbeispiel sind zumindest drei Fixierabschnitte vorgesehen sind, die vorzugsweise winkelmäßig entlang des Umfangs gleichmäßig verteilt am Siebträgergehäuse vorgesehen sind. Durch das Vorsehen von mehr als zwei Fixierabschnitten wird erreicht, dass der Siebträger entlang des Umfangs gleichmäßig am Anschlussabschnitt fixiert wird, d.h. Schwankungen des Anpressdrucks entlang des Umfangs können dadurch minimiert werden.

Gemäß einem Ausführungsbeispiel verläuft eine Anlagefläche eines Abschnitts des Fixierabschnitts, der mit der Fixierkontur des Anschlussabschnitts zusammenwirkt, bezogen auf eine Ebene, in der ein kreisförmiger Anlageabschnitt des Siebträgergehäuses liegt, schräg. Vorzugsweise verläuft auch ein oberer Bereich der Fixierkontur schräg, um ein Anheben des Siebträgers gegenüber dem Anlageabschnitt des Anschlussabschnitts zu bewirken. Durch die Schräge der Anlagefläche des Fixierabschnitts passt sich dieser dem schrägen Verlauf der Fixierkontur an, so dass eine flächige Anlage des Fixierabschnitts gegenüber der Fixierkontur erreicht wird.

Gemäß einem Ausführungsbeispiel weisen die Fixierabschnitte in Umfangsrichtung gesehen eine Breite zwischen 1,5 cm und 4 cm, vorzugsweise zwischen 2 cm und 3,5 cm, insbesondere 2,5 cm auf. Dadurch wird erreicht, dass die Anlagefläche des Fixierabschnitts ausreichend groß ist, um eine hinreichend gute Anpressung des Siebträgers gegenüber dem Anlageabschnitt des Anschlussabschnitts zu erreichen.

Gemäß einem Ausführungsbeispiel ist der von den Fixierabschnitten umschlossene Umfangsbereich des Siebträgergehäuses kleiner ist als der Umfangsbereich, an dem keine Fixierabschnitte vorgesehen sind. Dadurch wird ein kompakt bauender Siebträger erreicht, der darüber hinaus leicht reinigbar ist, da sich die Fixierabschnitte lediglich über einen kleinen, sehr begrenzten Umfangsabschnitt erstrecken und damit durch Abspülen mit klarem Wasser oder durch Abwischen leicht zu säubern sind.

Gemäß einem alternativen Ausführungsbeispiel ist der von den Fixierabschnitten umschlossene Umfangsbereich des Siebträgergehäuses größer ist als der Umfangsbereich, an dem keine Fixierabschnitte vorgesehen sind. Damit wird erreicht, dass der Siebträger entlang seines Umfangs gleichmäßig an dem Anlageabschnitt des Anschlussabschnitts angepresst wird.

Gemäß einem weiteren Aspekt bezieht sich die Erfindung auf einen Anschlussabschnitt für eine Kaffeemaschine, der zur Befestigung eines Siebträgers im Bereich eines Auslasses der Kaffeemaschine ausgebildet ist, wobei an dem Anschlussabschnitt unter Druck stehendes Wasser abgegeben wird, um ein Kaffeegetränk zuzubereiten. An dem Anschlussabschnitt sind außenumfangsseitig zumindest zwei Fixierkonturen vorgesehen, die radial nach außen gegenüber einer kreisringförmigen Außenumfangskontur des Anschlussabschnitts abstehen und dazu ausgebildet sind, zumindest abschnittsweise von einem Fixierabschnitt eines Siebträgers umgriffen zu werden, um den Siebträger an dem Anschlussabschnitt zu fixieren.

Dadurch wird erreicht, dass an dem Anschlussabschnitt innenumfangsseitig keine Ausnehmungen bzw. Hinterschneidungen vorgesehen sein müssen, um den Siebträger an dem Anschlussabschnitt zu befestigen, so dass die Bereiche des Anschlussabschnitts, die mit dem Kaffeepulver in Berührung kommen, leicht zu reinigen sind.

Gemäß einem Ausführungsbeispiel erstrecken sich die Fixierkonturen jeweils über einen Winkelbereich von mehr als 90° aber weniger als 180° umfangsseitig um den Anschlussabschnitt. Dadurch wird erreicht, dass die Fixierkonturen eine hinreichende Länge haben, damit der Siebträger bei Verdrehen um eine vertikal verlaufende Mittelhochachse gegenüber dem Anschlussabschnitt angehoben und dabei gegenüber diesem angepresst wird.

Gemäß einem Ausführungsbeispiel sind zwischen den Fixierkonturen Ausnehmungen vorgesehen, wobei die Ausnehmungen jeweils einen Winkelbereich kleiner als 90° belegen. Vorzugsweise sind die Ausnehmungen größer ausgebildet als die Fixierabschnitte des Siebträgers, um die Fixierabschnitte durch diese Ausnehmungen hindurchführen zu können, so dass die Fixierabschnitte nach Verdrehen des Siebträgers relativ zum Anschlussabschnitt die Fixierkonturen oberseitig umgreifen können.

Gemäß einem Ausführungsbeispiel ist der von den Fixierkonturen umschlossene Umfangsbereich des Anschlussabschnitts größer als der Umfangsbereich, der durch zwischen den Fixierkonturen befindliche Ausnehmungen belegt ist. Dadurch wird erreicht, dass der obere Bereich der Fixierkontur, gegenüber der der Fixierabschnitt zur Anlage gelangt, mit einer sehr geringen Steigung ausgebildet werden kann, wodurch eine gute und sichere Fixierung des Siebträgers an dem Anschlussabschnitt erreicht wird.

Gemäß einem alternativen Ausführungsbeispiel ist der von den Fixierkonturen umschlossene Umfangsbereich des Anschlussabschnitts kleiner als der Umfangsbereich, der durch zwischen den Fixierkonturen befindliche Ausnehmungen belegt ist. In diesem Falle sollte der von den Fixierabschnitten umschlossene Umfangsbereich des Siebträgergehäuses größer sein als der Umfangsbereich, an dem keine Fixierabschnitte vorgesehen sind, um eine hinreichend gute Fixierung des Siebträgers am Anschlussabschnitt sicherstellen zu können.

Gemäß einem Ausführungsbeispiel verlaufen die mit den Fixierabschnitten des Siebträgers zusammenwirkenden oberen Bereiche der Fixierkonturen bezogen auf die Ebene, in der ein kreisförmiger Anlageabschnitt (beispielsweise gebildet durch eine Dichtungsfläche) des Anschlussabschnitts liegt, schräg. Durch diesen schrägen Verlauf wird erreicht, dass der Siebträger beim Verdrehen des Siebträgers relativ zum Anschlussabschnitt gegenüber diesem angehoben und angepresst wird.

Gemäß einem Ausführungsbeispiel ist an dem Anschlussabschnitt ein Spritzschutzabschnitt in Form eines umlaufenden und geschlossenen Randes vorgesehen, der nach unten gegenüber einer durch eine Dichtung gebildeten Siebträgerdichtebene vorsteht. Dieser Spritzschutzabschnitt steht beispielsweise 3mm bis 1cm, vorzugsweise 5mm bis 8mm, insbesondere 4mm gegenüber der Siebträgerdichtebene vor. Dadurch wird erreicht, dass bei eventuell auftretender Undichtigkeit, beispielsweise verursacht durch ein nicht vollständiges Verschließen des Bajonettverschlusses, die unter Druck stehende Flüssigkeit nicht radial nach außen spritzen kann, sondern durch den Spritzschutzabschnitt nach unten umgelenkt wird.

Gemäß einem weiteren Aspekt bezieht sich die Erfindung auf eine Kaffeemaschine umfassend einen Anschlussabschnitt und einen Siebträger. Der Siebträger ist an dem Anschlussabschnitt mittels eines Bajonettverschlusses fixierbar. Der Siebträger und der Anschlussabschnitt sind gemäß einem der vorbeschriebenen Ausführungsbeispiele ausgebildet.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft einen Siebträger (ohne Griffelement) in einer perspektivischen Seitendarstellung;
- Fig. 2: beispielhaft einen Siebträger (ohne Griffelement) in einer Draufsichtdarstellung;
- Fig. 3: beispielhaft eine Schnittdarstellung des Siebträgers gemäß Fig. 2 entlang der Schnittlinie A-A;
- Fig. 4: beispielhaft eine Schnittdarstellung des Siebträgers gemäß Fig. 2 entlang der Schnittlinie B-B;
- Fig. 5: beispielhaft ein Anschlussabschnitt einer Kaffeemaschine in einer perspektivischen Seitendarstellung;
- Fig. 6: beispielhaft der Anschlussabschnitt gemäß Fig. 5 in einer Seitendarstellung;
- Fig. 7: beispielhaft eine Anordnung eines Siebträgers an einem Anschlussabschnitt in einer Seitendarstellung; und
- Fig.8: beispielhaft eine Anordnung eines Siebträgers an einem Anschlussabschnitt, der an einer Brühgruppe vorgesehen ist, in einer perspektivischen Seitendarstellung.

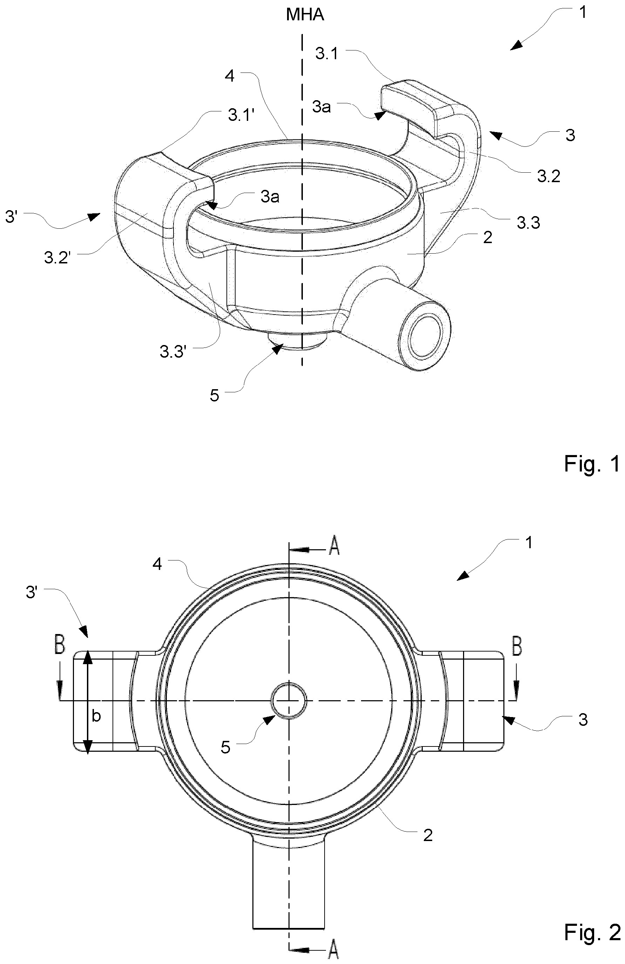

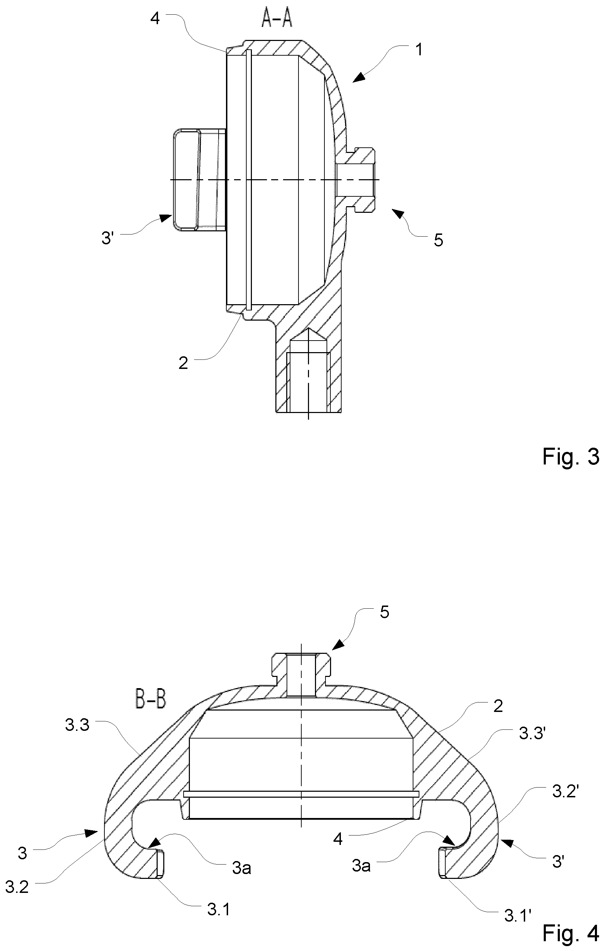

Figuren 1 bis 4 zeigen einen Siebträger 1 in unterschiedlichen Darstellungen, teilweise in Schnittdarstellungen. Der Siebträger 1 weist ein Siebträgergehäuse 2 auf, das mittels eines Bajonettverschlusses an einem Anschlussabschnitt 10 einer Kaffeemaschine, insbesondere einer Espressomaschine befestigbar ist. Der Bajonettverschluss ist außenliegend vorgesehen, so dass die Reinigbarkeit des Anschlussabschnittes 10 und damit der gesamten Kaffeemaschine entscheidend verbessert ist.

Das Siebträgergehäuse 2 ist in an sich bekannterweise im Bereich des Anlageabschnitts 4 kreisrund ausgebildet, so dass ein Anordnen des Siebträgers 1 am ebenfalls zumindest unterseitig kreisrund ausgebildeten Anschlussabschnitt 10 durch eine Rotation des Siebträgers 1 relativ zum Anschlussabschnitt 10 und damit ein Öffnen bzw. Schließen des Bajonettverschlusses durch diese Rotation möglich ist. Unterseitig weist das Siebträgergehäuse 2 einen Auslass 5 auf, über den das gebrühte Kaffeegetränk abfließen kann.

Der außenliegende Bajonettverschluss ist dadurch gebildet, dass an dem Siebträger 1 außenseitig Fixierabschnitte 3, 3' vorgesehen sind. Im gezeigten Ausführungsbeispiel sind die Fixierabschnitte 3, 3' klauenartig ausgebildet. Die Fixierabschnitte 3, 3' stehen an der dem Auslass 5 gegenüberliegenden Oberseite des Siebträgergehäuses 2 nach oben hin ab und in radialer Richtung außenseitig gegenüber dem kreisringförmigen Siebträgergehäuseabschnitt 2.1 vor. Insbesondere stehen die Fixierabschnitte 3, 3' nach oben gegenüber dem Anlageabschnitt 4 des Siebträgers 1 vor. Zudem stehen die Fixierabschnitte 3, 3' radial nach außen gegenüber der kreisringförmigen Kontur des Anlageabschnitts 4 des Siebträgers 1 über. Dadurch wird erreicht, dass die Fixierabschnitte 3, 3' des Siebträgers 1 den oberhalb des Siebträgers 1 befindlichen Anschlussabschnitt 10 abschnittsweise umgreifen und dadurch eine formschlüssige Verbindung mit am Anschlussabschnitt 10 außenseitig vorgesehenen und radial nach außen abstehenden Fixierkonturen 11, 11' herstellbar ist.

Mehr im Detail weisen die Fixierabschnitte 3, 3' im gezeigten Ausführungsbeispiel jeweils einen ersten Abschnitt 3.1, 3.1', einen zweiten Abschnitt 3.2, 3.2' und einen dritten Abschnitt 3.3, 3.3' auf.

Der dritte Abschnitt 3.3, 3.3' des Fixierabschnitts 3, 3' steht radial nach außen gegenüber dem Siebträgergehäuse 2 ab und bewirkt damit eine radiale Beabstandung des ersten und zweiten Abschnitts 3.1, 3.2, 3.1', 3.2' gegenüber dem kreisringförmigen Anlageabschnitt 4.

Der zweite Abschnitt 3.2, 3.2' steht gegenüber dem dritten Abschnitt 3.3, 3.3' winklig, insbesondere rechtwinklig oder im Wesentlichen rechtwinklig nach oben ab. Er bewirkt eine Beabstandung des ersten Abschnitts 3.1, 3.1' von dritten Abschnitt 3.3, 3.3'.

Der erste Abschnitt 3.1, 3.1' steht winklig, insbesondere rechtwinklig oder im Wesentlichen rechtwinklig vom zweiten Abschnitt 3.2, 3.2' ab, und zwar bezogen auf die Mittelhochachse MHA des Siebträgers 1 radial nach innen. Der erste Abschnitt 3.1, 3.1' weist an der dem dritten Abschnitt 3.3, 3.3' zugewandten Seite die Anlagefläche 3a auf, mittels der der Fixierabschnitt 3, 3' gegenüber der Fixierkontur 11, 11' zur Anlage kommt.

Durch diese klauenartige bzw. C-förmige Ausbildung der Fixierabschnitte 3, 3' ist es möglich, dass die am Anschlussabschnitt 10 vorgesehenen Fixierkonturen außenseitig umgriffen werden, um eine außenseitige formschlüssige Verbindung zwischen dem Siebträger 1 und dem Anschlussabschnitt 10 mittels eines außenliegenden Bajonettverschlusses herzustellen.

Um eine flüssigkeitsdichte Verbindung zwischen dem Siebträger 1 und dem Anschlussabschnitt 10 herzustellen, ist der Bajonettverschluss zwischen dem Siebträger 1 und dem Anschlussabschnitt 10 derart ausgebildet, dass bei Rotation des Siebträgers 1 relativ zum Anschlussabschnitt 10 der Siebträger 1 mit dessen Anlageabschnitt 4 gegenüber einer Dichtung 15 des Anschlussabschnitts 10 angepresst wird.

Um diese Anpressung zu erreichen, verläuft die Anlagefläche 3a des Siebträgers 1 schräg zur Ebene, in der der Anlageabschnitt 4 des Siebträgers 1 liegt. Damit passt sich die Anlagefläche 3a an den schrägen Verlauf der Fixierkontur 11, 11' des Anschlussabschnitts 10 an, um eine flächige Anlage gegenüber dem oberen Bereich 11.1, 11.1' dieser Fixierkontur 11, 11' zu erreichen.

Zuvor wurde ein Ausführungsbeispiel eines Siebträgers 1 mit zwei einander diametral gegenüberliegenden Fixierabschnitten 3, 3' beschrieben. Es versteht sich, dass auch mehr als zwei Fixierabschnitte 3, 3' umfangsseitig vorgesehen sein können. Vorzugsweise sind diese Fixierabschnitte 3, 3' umfangsseitig in gleichen oder im Wesentlichen gleichen Winkelabständen vorgesehen.

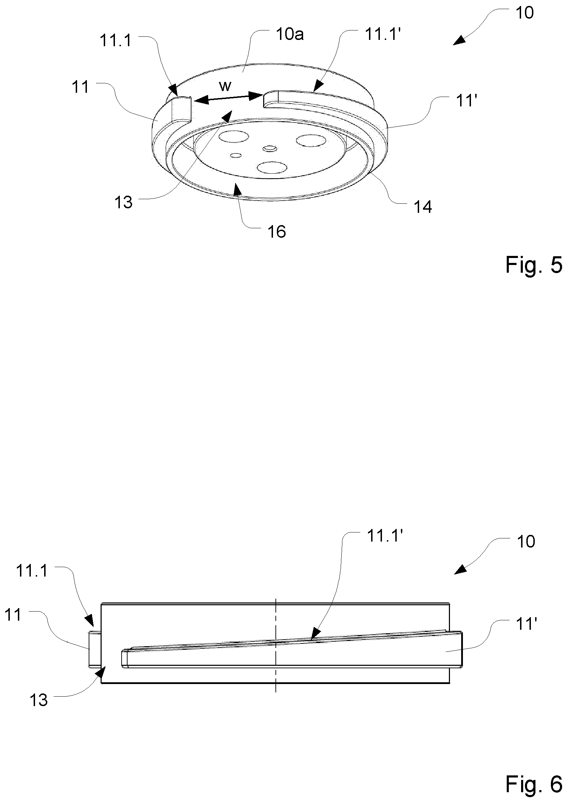

Figuren 5 und 6 zeigen den Anschlussabschnitt 10 jeweils in einer Einzeldarstellung. Der Anschlussabschnitt 10 ist dazu ausgebildet, an einem Heißwasserauslauf einer Kaffeemaschine angeordnet zu werden, um einen Siebträger 1 an dem Heißwasserauslauf zu befestigen. Der Anschlussabschnitt 10 kann beispielsweise an einer Brühgruppe einer Kaffeemaschine vorgesehen sein oder einen integralen Bestandteil einer Brühgruppe bilden.

Der Anschlussabschnitt 10 weist einen kreisringförmigen Außenbereich 10a auf, an dem umfangsseitig mehrere, im gezeigten Ausführungsbeispiel zwei Fixierkonturen 11, 11' vorgesehen sind, die radial nach außen gegenüber dem kreisringförmigen Außenbereich 10a abstehen.

Die Fixierkonturen 11, 11' sind vorzugsweise ringsegmentartig ausgebildet und erstrecken sich über einen Teilumfangsbereich des Anschlussabschnitts 10. Beispielsweise erstrecken sich die Fixierkonturen 11, 11' jeweils um einen Winkelbereich größer als 90° aber kleiner als 180° umfangsseitig um den Außenbereich 10a herum.

In Umfangsrichtung gesehen zwischen dem Ende der ersten Fixierkontur 11 und dem Beginn der zweiten Fixierkontur 11' ist jeweils eine Ausnehmung 13 vorgesehen. Die Ausnehmung 13 ist an die Breite b der Fixierabschnitte 3, 3' des Siebträgers angepasst, und zwar derart, dass die Weite w der der Ausnehmung 13 größer ist als die Breite b der Fixierabschnitte 3, 3'. Dadurch wird erreicht, dass die Fixierabschnitte 3, 3' durch die Ausnehmungen 13 hindurchgeführt werden können und damit der Anlageabschnitt 4 des Siebträgers 1 gegenüber der Dichtung 15 des Anschlussabschnitts 10 zur Anlage gebracht werden kann. Nach dem Verdrehen des Siebträgers 1 relativ zum Anschlussabschnitt 10 hintergreifen die ersten Abschnitte 3.1, 3.1' der Fixierabschnitte 3, 3' die jeweiligen Fixierkonturen 11, 11'.

Wie insbesondere in Fig. 6 ersichtlich, sind die oberen Bereiche 11.1, 11.1' der Fixierkonturen 11, 11' schräg in Bezug auf eine Siegträgerdichtebene SDE ausgebildet, in der die Unterseite der Dichtung 15 zu liegen kommt. Dadurch wird erreicht, dass bei Verdrehung des Siebträgers 1 relativ zum Anschlussabschnitt 10 der Siebträger 1 in vertikaler Richtung angehoben und dadurch gegen die Dichtung 15 angepresst wird.

Im Inneren des Anschlussabschnitts 10, ist, wie in Fig. 5 ersichtlich, eine ringartige Ausnehmung 16 vorgesehen, in welche die ringartige Dichtung 15 einsetzbar ist.

Zuvor wurde ein Ausführungsbeispiel eines Anschlussabschnitts 10 mit zwei einander diametral gegenüberliegenden Fixierkonturen 11, 11' beschrieben. Es versteht sich, dass auch mehr als zwei Fixierkonturen 11, 11' umfangsseitig vorgesehen sein können. Vorzugsweise sind diese Fixierkonturen 11, 11' umfangsseitig in gleichen oder im Wesentlichen gleichen Winkelabständen vorgesehen, wobei jeweils zwischen zwei benachbarten Fixierkonturen 11, 11' eine Ausnehmung 13 vorgesehen ist. Die Anzahl der Fixierkonturen 11, 11' und Fixierabschnitte 3, 3' sollte vorzugsweise gleich gewählt werden.

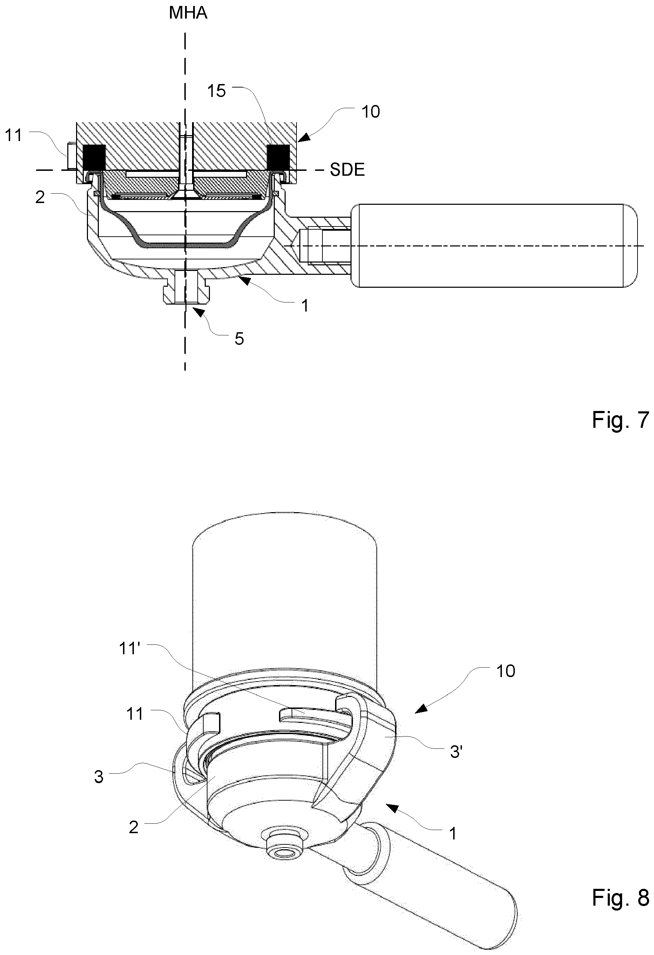

Figuren 7 und 8 zeigen den an dem Anschlussabschnitt 10 montierten Siebträger 1 in unterschiedlichen Darstellungen.

Wie in Fig. 7 ersichtlich weist der Anschlussabschnitt 10 einen Spritzschutzabschnitt 14 auf, der radial außerhalb der Dichtung 15 vorgesehen ist und der nach unten hin gegenüber der Diebträgerdichtebene SDE übersteht. Dadurch kann erreicht werden, dass bei eventuellen Undichtigkeiten die Flüssigkeit nicht radial nach außen austritt bzw. verspritz wird, sondern nach unten umgelenkt wird. Dadurch kann ein unerwünschtes weiträumiges Verspritzen von Kaffeegetränk verhindert werden.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Siebträger
- 2: Siebträgergehäuse
- 3, 3': Fixierabschnitt
- 3a: Anlagefläche
- 3.1, 3.1': erster Abschnitt
- 3.2, 3.2': zweiter Abschnitt
- 3.3, 3.3': dritter Abschnitt
- 4: Anlageabschnitt
- 5: Auslass

- 10: Anschlussabschnitt
- 10a: Außenbereich
- 11, 11': Fixierkontur
- 11.1, 11.1': oberer Bereich
- 13: Ausnehmung
- 14: Spritzschutzabschnitt
- 15: Dichtung
- 16: Ausnehmung

- b: Breite
- MHA: Mittelhochachse
- SDE: Siebträgerebene
- w: Weite

## Patentansprüche

1. Siebträger für eine Kaffeemaschine umfassend ein Siebträgergehäuse (2) und einen Griff zur Handhabung des Siebträgers, **dadurch gekennzeichnet, dass** an dem Siebträgergehäuse (2) zumindest zwei radial nach innen offene, eine Führungskontur ausbildende Fixierabschnitte (3, 3') vorgesehen sind, die dazu ausgebildet sind, eine am Anschlussabschnitt (10) der Kaffeemaschine radial nach außen abstehende Fixierkontur (11) zumindest abschnittsweise außenseitig zu umgreifen.

2. Siebträger nach Anspruch 1, **dadurch gekennzeichnet, dass** die Fixierabschnitte (3, 3') hakenartig nach außen abstehend und nach oben hin über einen kreisförmigen Anlageabschnitt (4) des Siebträgergehäuses (2) abstehend vorgesehen sind.

3. Siebträger nach Anspruch 1 oder 2, **dadurch gekennzeichnet, dass** genau zwei Fixierabschnitte (3, 3') vorgesehen sind, die einander diametral gegenüberliegen.

4. Siebträger nach Anspruch 1 oder 2, **dadurch gekennzeichnet, dass** zumindest drei Fixierabschnitte (3, 3') vorgesehen sind, die winkelmäßig entlang des Umfangs gleichmäßig verteilt am Siebträgergehäuse (2) vorgesehen sind.

5. Siebträger nach einem der vorhergehenden Ansprüche, **dadurch gekennzeichnet, dass** eine Anlagefläche (3a) des mit der Fixierkontur (11) des Anschlussabschnitts (10) zusammenwirkenden Abschnitts (3.1, 3.1') des Fixierabschnitts (3, 3') bezogen auf die Ebene, in der ein kreisförmiger Anlageabschnitt (4) des Siebträgergehäuses (2) liegt, schräg verläuft.

6. Siebträger nach einem der Ansprüche 1 bis 5, **dadurch gekennzeichnet, dass** der von den Fixierabschnitten (3, 3') umschlossene Umfangsbereich des Siebträgergehäuses (2) kleiner ist als der Umfangsbereich, an dem keine Fixierabschnitte (3, 3') vorgesehen sind.

7. Siebträger nach einem der Ansprüche 1 bis 5, **dadurch gekennzeichnet, dass** der von den Fixierabschnitten (3, 3') umschlossene Umfangsbereich des Siebträgergehäuses (2) größer ist als der Umfangsbereich, an dem keine Fixierabschnitte (3, 3') vorgesehen sind.

8. Anschlussabschnitt für eine Kaffeemaschine zur Befestigung eines Siebträgers (1) im Bereich eines Auslasses der Kaffeemaschine, an dem unter Druck stehendes Wasser abgegeben wird, **dadurch gekennzeichnet, dass** an dem Anschlussabschnitt (10) außenumfangsseitig zumindest zwei Fixierkonturen (11, 11') vorgesehen sind, die radial nach außen gegenüber einer kreisringförmigen Außenumfangskontur des Anschlussabschnitts (10) abstehen und dazu ausgebildet sind, zumindest abschnittsweise von einem Fixierabschnitt (3, 3') eines Siebträgers (1) umgriffen zu werden, um den Siebträger (1) an dem Anschlussabschnitt (10) zu fixieren.

9. Anschlussabschnitt nach Anspruch 8, **dadurch gekennzeichnet, dass** sich die Fixierkonturen (11, 11') jeweils über einen Winkelbereich von mehr als 90° aber weniger als 180° umfangsseitig um den Anschlussabschnitt (10) erstrecken.

10. Anschlussabschnitt nach Anspruch 8 oder 9, **dadurch gekennzeichnet, dass** zwischen den Fixierkonturen (11, 11') Ausnehmungen (13) vorgesehen sind und dass die Ausnehmungen (13) jeweils einen Winkelbereich kleiner als 90° belegen.

11. Anschlussabschnitt nach einem der Ansprüche 8 bis 10, **dadurch gekennzeichnet, dass** der von den Fixierkonturen (11, 11') umschlossene Umfangsbereich des Anschlussabschnitts (10) größer ist als der Umfangsbereich, der durch zwischen den Fixierkonturen (11, 11') befindliche Ausnehmungen (13) belegt ist.

12. Anschlussabschnitt nach Anspruch 8, **dadurch gekennzeichnet, dass** der von den Fixierkonturen (11, 11') umschlossene Umfangsbereich des Anschlussabschnitts (10) kleiner ist als der Umfangsbereich, der durch zwischen den Fixierkonturen (11, 11') befindliche Ausnehmungen (13) belegt ist.

13. Anschlussabschnitt nach einem der Ansprüche 8 bis 12, **dadurch gekennzeichnet, dass** die mit den Fixierabschnitten (3, 3') des Siebträgers (1) zusammenwirkenden oberen Bereiche (11.1, 11.1') der Fixierkonturen (11, 11') bezogen auf die Ebene, in der ein kreisförmiger Anlageabschnitt des Anschlussabschnitts (10) liegt, schräg verlaufen.

14. Anschlussabschnitt nach einem der Ansprüche 8 bis 13, **dadurch gekennzeichnet, dass** an dem Anschlussabschnitt (10) ein Spritzschutzabschnitt (14) in Form eines umlaufenden und geschlossenen Randes vorgesehen ist, der nach unten gegenüber einer durch eine Dichtung (15) gebildeten Siebträgerdichtebene (SDE) vorsteht.

15. Kaffeemaschine umfassend einen Anschlussabschnitt (10) und einen Siebträger (1), wobei der Siebträger (1) an dem Anschlussabschnitt (10) mittels eines Bajonettverschlusses fixierbar ist, **dadurch gekennzeichnet, dass** der Siebträger (1) gemäß einem der Ansprüche 1 bis 7 und der Anschlussabschnitt (10) gemäß einem der Ansprüche 8 bis 14 ausgebildet ist.

## Geänderte Patentansprüche

### Geänderte Patentansprüche gemäss Regel 137(2) EPÜ.

1. Siebträger für eine Kaffeemaschine umfassend ein Siebträgergehäuse (2) und einen Griff zur Handhabung des Siebträgers, **dadurch gekennzeichnet, dass** an dem Siebträgergehäuse (2) zumindest zwei radial nach innen offene, eine Führungskontur eines Bajonettverschlusses ausbildende Fixierabschnitte (3, 3') vorgesehen sind, die dazu ausgebildet sind, eine am Anschlussabschnitt (10) der Kaffeemaschine radial nach außen abstehende Fixierkontur (11) zumindest abschnittsweise außenseitig zu umgreifen.

2. Siebträger nach Anspruch 1, **dadurch gekennzeichnet, dass** die Fixierabschnitte (3, 3') hakenartig nach außen abstehend und nach oben hin über einen kreisförmigen Anlageabschnitt (4) des Siebträgergehäuses (2) abstehend vorgesehen sind.

3. Siebträger nach Anspruch 1 oder 2, **dadurch gekennzeichnet, dass** genau zwei Fixierabschnitte (3, 3') vorgesehen sind, die einander diametral gegenüberliegen.

4. Siebträger nach Anspruch 1 oder 2, **dadurch gekennzeichnet, dass** zumindest drei Fixierabschnitte (3, 3') vorgesehen sind, die winkelmäßig entlang des Umfangs gleichmäßig verteilt am Siebträgergehäuse (2) vorgesehen sind.

5. Siebträger nach einem der vorhergehenden Ansprüche, **dadurch gekennzeichnet, dass** eine Anlagefläche (3a) des mit der Fixierkontur (11) des Anschlussabschnitts (10) zusammenwirkenden Abschnitts (3.1, 3.1') des Fixierabschnitts (3, 3') bezogen auf die Ebene, in der ein kreisförmiger Anlageabschnitt (4) des Siebträgergehäuses (2) liegt, schräg verläuft.

6. Siebträger nach einem der Ansprüche 1 bis 5, **dadurch gekennzeichnet, dass** der von den Fixierabschnitten (3, 3') umschlossene Umfangsbereich des Siebträgergehäuses (2) kleiner ist als der Umfangsbereich, an dem keine Fixierabschnitte (3, 3') vorgesehen sind.

7. Siebträger nach einem der Ansprüche 1 bis 5, **dadurch gekennzeichnet, dass** der von den Fixierabschnitten (3, 3') umschlossene Umfangsbereich des Siebträgergehäuses (2) größer ist als der Umfangsbereich, an dem keine Fixierabschnitte (3, 3') vorgesehen sind.

8. Anschlussabschnitt für eine Kaffeemaschine zur Befestigung eines Siebträgers (1) im Bereich eines Auslasses der Kaffeemaschine, an dem unter Druck stehendes Wasser abgegeben wird, **dadurch gekennzeichnet, dass** an dem Anschlussabschnitt (10) außenumfangsseitig zumindest zwei Fixierkonturen (11, 11') vorgesehen sind, die radial nach außen gegenüber einer kreisringförmigen Außenumfangskontur des Anschlussabschnitts (10) abstehen und dazu ausgebildet sind, zumindest abschnittsweise von einem Fixierabschnitt (3, 3') eines Siebträgers (1), der eine Führungskontur eines Bajonettverschlusses ausbildet, umgriffen zu werden, um den Siebträger (1) an dem Anschlussabschnitt (10) zu fixieren.

9. Anschlussabschnitt nach Anspruch 8, **dadurch gekennzeichnet, dass** sich die Fixierkonturen (11, 11') jeweils über einen Winkelbereich von mehr als 90° aber weniger als 180° umfangsseitig um den Anschlussabschnitt (10) erstrecken.

10. Anschlussabschnitt nach Anspruch 8 oder 9, **dadurch gekennzeichnet, dass** zwischen den Fixierkonturen (11, 11') Ausnehmungen (13) vorgesehen sind und dass die Ausnehmungen (13) jeweils einen Winkelbereich kleiner als 90° belegen.

11. Anschlussabschnitt nach einem der Ansprüche 8 bis 10, **dadurch gekennzeichnet, dass** der von den Fixierkonturen (11, 11') umschlossene Umfangsbereich des Anschlussabschnitts (10) größer ist als der Umfangsbereich, der durch zwischen den Fixierkonturen (11, 11') befindliche Ausnehmungen (13) belegt ist.

12. Anschlussabschnitt nach Anspruch 8, **dadurch gekennzeichnet, dass** der von den Fixierkonturen (11, 11') umschlossene Umfangsbereich des Anschlussabschnitts (10) kleiner ist als der Umfangsbereich, der durch zwischen den Fixierkonturen (11, 11') befindliche Ausnehmungen (13) belegt ist.

13. Anschlussabschnitt nach einem der Ansprüche 8 bis 12, **dadurch gekennzeichnet, dass** die mit den Fixierabschnitten (3, 3') des Siebträgers (1) zusammenwirkenden oberen Bereiche (11.1, 11.1') der Fixierkonturen (11, 11') bezogen auf die Ebene, in der ein kreisförmiger Anlageabschnitt des Anschlussabschnitts (10) liegt, schräg verlaufen.

14. Anschlussabschnitt nach einem der Ansprüche 8 bis 13, **dadurch gekennzeichnet, dass** an dem Anschlussabschnitt (10) ein Spritzschutzabschnitt (14) in Form eines umlaufenden und geschlossenen Randes vorgesehen ist, der nach unten gegenüber einer durch eine Dichtung (15) gebildeten Siebträgerdichtebene (SDE) vorsteht.

15. Kaffeemaschine umfassend einen Anschlussabschnitt (10) und einen Siebträger (1), wobei der Siebträger (1) an dem Anschlussabschnitt (10) mittels eines Bajonettverschlusses fixierbar ist, **dadurch gekennzeichnet, dass** der Siebträger (1) gemäß einem der Ansprüche 1 bis 7 und der Anschlussabschnitt (10) gemäß einem der Ansprüche 8 bis 14 ausgebildet ist.
